# FASCICULE DE BREVET EUROPEEN

(11) **EP 4 526 575 B1**
(45) Date de publication et mention de la délivrance du brevet: **01.07.2026**
(21) Numéro de dépôt: 23728657.0
(22) Date de dépôt: 17.05.2023
(51) Int. Cl.: F16D 11/10

(54) **DISPOSITIF DE COUPLAGE POUR REDUCTEUR A DEUX RAPPORTS DE VITESSES**
KUPPLUNGSVORRICHTUNG FÜR EIN UNTERSETZUNGSGETRIEBE MIT ZWEI ÜBERSETZUNGSVERHÄLTNISSEN
COUPLING DEVICE FOR A REDUCTION GEAR WITH TWO GEAR RATIOS

(30) Priorité: 20.05.2022 FR 2204839
(43) Date de publication de la demande: 26.03.2025
(73) Titulaire: Horse Powertrain Solutions, S.L.U., 28108 Alcobendas, Madrid (ES)
(72) Inventeur: LASSEUR, Bertrand, 78084 Guyancourt (FR)
(74) Mandataire: Elzaburu S.L.P.
(86) Numéro de dépôt international: PCT/EP2023/063304
(87) Numéro de publication internationale: WO 2023/222783

(56) Documents cités:
- WO-A1-2014/132837
- DE-U1- 202018 103 633
- JP-A- 2020 159 469

## Description

### DOMAINE TECHNIQUE DE L'INVENTION

La présente invention concerne de manière générale les systèmes de couplage d'arbres, permettant de transmettre un couple d'un arbre à l'autre, et notamment les systèmes de réduction de vitesses à prise constante et à deux rapports de vitesses.

Elle concerne plus particulièrement un dispositif de couplage d'arbres, comportant :
- un arbre principal orienté selon un axe principal,
- deux pignons fous montés libres en rotation sur l'arbre principal autour de l'axe principal, et
- un système de couplage interposé entre les deux pignons fous.

L'invention concerne également un réducteur de vitesses comportant un dispositif de couplage d'arbres tel que précité, et un véhicule automobile équipé d'un tel réducteur.

Elle trouve une application particulièrement avantageuse dans la transmission d'un couple issu d'une machine électrique.

### ETAT DE LA TECHNIQUE

Un moteur à combustion interne développe un couple qui varie avec la vitesse de rotation du vilebrequin. Un tel moteur présente donc une plage d'utilisation restreinte. Dans un véhicule automobile équipé d'un tel moteur, il est alors nécessaire d'associer au moteur une boîte de vitesses.

Dans ce domaine, de nombreux systèmes de boîtes de vitesses ont été développés. Généralement, une telle boîte comporte deux arbres pourvus de pignons en vis-à-vis de diamètres différents qui s'engrènent les uns avec les autres, les pignons d'un des arbres étant par exemple montés fou sur cet arbre (c'est-à-dire étant laissés libres en rotation sur cet arbre) alors que les autres sont montés fixes sur l'autre arbre. Afin de passer un rapport de vitesse, ces boîtes de vitesses utilisent des dispositifs de couplage conçus pour coupler l'un des pignons fous avec l'arbre de la boîte de vitesses sur lequel il est monté de manière à égaliser leurs vitesses de rotation.

Pour cela, les dispositifs de couplage comprennent généralement un baladeur qui est lié en rotation à l'un des arbres de la boîte et qui est adapté à coulisser sur cet arbre pour venir, au moyen de doigts, craboter une denture d'un pignon fou.

Dans un véhicule automobile électrique (ou hybride), la machine électrique est
couplée à un réducteur de vitesse. En règle générale, ce réducteur est mono-rapport. Il n'est donc généralement pas prévu de boîte de vitesses. Une machine électrique est en effet adaptée à délivrer un couple sensiblement constant sur une grande plage de vitesses de rotation. Elle peut donc être utilisée avec un tel réducteur dans un véhicule automobile. L'avantage d'un réducteur mono-rapport est qu'il est simple, peu coûteux, et ne pose pas de problème de rupture de couple (lors d'un passage de rapports de vitesses).

On note toutefois qu'une machine électrique, passé un certain seuil de vitesse de rotation, voit le couple qu'elle peut délivrer se réduire fortement. Alors la puissance qu'elle peut générer sature. En d'autres termes, le couple délivré par un moteur électrique n'est pas constant de manière indéfinie. Associer un réducteur à plusieurs rapports à une telle machine électrique peut donc conserver un intérêt, notamment dans le domaine automobile. Typiquement, un réducteur bi-rapport permet soit de réduire la taille de la machine électrique, soit d'utiliser la machine électrique dans des domaines de régime où sa consommation reste réduite, soit d'implanter la machine électrique sur des véhicules particuliers tels que les véhicules utilitaires susceptibles de déplacer des charges lourdes, ou dans des véhicules de sport pouvant atteindre des vitesses élevées.

L'inconvénient d'un réducteur à deux rapports est qu'actuellement, il est complexe, coûteux, et lourd, ou qu'il est lent lorsqu'il s'agit de passer d'un rapport à l'autre, ce qui occasionne des ruptures de couple qui ne sont pas compatibles avec le domaine de l'automobile.

Il est connu que le document JP2020159469 divulgue une transmission conçue pour améliorer son opérabilité, ainsi qu'un véhicule. La transmission comprend : un premier arbre rotatif ; un second arbre rotatif doté de dents de chien, coaxial avec le premier arbre rotatif, monté extérieurement sur le premier arbre rotatif et rotatif par rapport à celui-ci ; une première partie d'engagement tournant de manière solidaire avec le premier arbre rotatif et disposée au niveau des dents de chien pour pouvoir s'y engager ; une pluralité d'engrenages coaxiaux avec le second arbre rotatif, rotatifs par rapport à celui-ci, et différant les uns des autres par leurs rapports de transmission ; une seconde partie d'engagement tournant de manière solidaire avec le second arbre rotatif et disposée au niveau de la pluralité d'engrenages pour pouvoir s'engager sélectivement avec ceux-ci ; un actionneur qui engage ou désengage la seconde partie d'engagement avec chacun des engrenages ; et une unité de commande qui contrôle l'actionneur de sorte que la seconde partie d'engagement soit engagée avec un engrenage prédéfini parmi la pluralité d'engrenages, en fonction de l'état de déplacement du véhicule, lorsque les premier et second arbres rotatifs tournent de manière solidaire grâce à l'engagement d'au moins la première partie d'engagement avec les dents de chien.

### PRESENTATION DE L'INVENTION

Afin de remédier aux inconvénients précités de l'état de la technique, la présente invention propose un réducteur à deux rapports, d'architecture simple et n'occasionnant presqu'aucune rupture de couple lors d'un passage de rapport de vitesses.

Plus particulièrement, on propose un dispositif de couplage d'arbres utilisable dans un réducteur de vitesse, qui comporte un arbre principal orienté selon un axe principal, deux pignons fous montés libres en rotation sur l'arbre principal autour de l'axe principal, et un système de couplage interposé entre les deux pignons fous. Selon l'invention, le système de couplage comporte :
- un moyeu solidaire en rotation de l'arbre principal,
- un baladeur de sélection monté coulissant par rapport au moyeu selon ledit axe principal entre une position couplée à l'un des pignons fous et une position couplée à l'autre des pignons fous,
- un organe de déplacement du baladeur de sélection de l'une à l'autre des deux positions couplées,
- un baladeur de verrouillage monté coulissant par rapport au moyeu selon ledit axe principal entre une position couplée à l'un des pignons fous et une position couplée à l'autre des pignons fous, et
- un moyen d'éjection adapté à automatiquement déplacer le baladeur de verrouillage d'une position couplée à un premier quelconque des pignons fous à l'autre des pignons fous après que le baladeur de sélection a été déplacé de la position couplée au premier des pignons fous à la position couplée à l'autre des pignons fous.

Les deux baladeurs permettent donc, ensemble, de coupler l'arbre principal à l'un des pignons fous.

L'utilisation de deux baladeurs permet au premier de ces baladeurs (le baladeur de sélection) de venir facilement craboter l'un des pignons fous, avant que l'autre ne vienne bloquer complètement le pignon fou par rapport à l'arbre principal.

Le moyen d'éjection est conçu pour que le baladeur de verrouillage ne se déplace que lorsque le crabotage du pignon fou par le baladeur de sélection a eu lieu.

Ainsi, grâce à l'invention, l'arbre principal est toujours prévu pour être couplé à l'un des pignons fous, si bien que le réducteur se trouve toujours sur l'un des deux rapports de vitesses. Ainsi, ce réducteur ne présente pas de position neutre stable et n'occasionne donc pas ou peu de rupture de couple, ce qui le rend compatible avec une application sur un véhicule électrique ou hybride.

Par ailleurs, l'invention ne nécessite pas de découpler la boite de vitesses de la machine électrique lors du passage d'un rapport, si bien qu'il n'est pas nécessaire de prévoir d'embrayage. Il peut éventuellement être utile d'utiliser un limitateur de couple en lieu et place d'un tel embrayage, pour offrir plus de souplesse au système. Le réglage du limiteur de couple sera alors aisé puisque le changement de rapport pourra être prévu pour intervenir toujours à la même vitesse de rotation.

En outre, le changement de rapport s'effectue sans synchronisation des vitesses différentielles entre l'arbre principal et le pignon fou à connecter, ce qui permet d'effectuer un changement de rapport très rapide, sans rupture de couple sensible pour l'usager.

D'autres caractéristiques avantageuses et non limitatives du dispositif de couplage conforme à l'invention, prises individuellement ou selon toutes les combinaisons techniquement possibles, sont les suivantes :
- le baladeur de sélection et le baladeur de verrouillage présentent des formes circulaires et sont imbriqués l'un dans l'autre ;
- chaque pignon fou comporte au moins un crabot tourné vers l'autre pignon fou ;
- le baladeur de sélection et le baladeur de verrouillage comportent des doigts adaptés à craboter les crabots des pignons fous de manière que, lorsque le baladeur de sélection et le baladeur de verrouillage sont en position couplée à un même desdits pignons fous,
   leurs doigts prennent chaque crabot dudit pignon fou en sandwich ;
- chaque pignon fou comporte un nombre de crabots régulièrement répartis autour de l'axe principal qui est supérieur ou égal à deux ;
- le baladeur de sélection et le baladeur de verrouillage comportent un nombre de doigts régulièrement répartis autour de l'axe principal identique au nombre de crabots de chaque pignon fou ;
- l'espace angulaire autour de l'axe principal délimité entre deux crabots est strictement supérieur à deux fois l'espace angulaire autour de l'axe principal occupé par un doigt du baladeur de sélection ;
- le moyeu présente plusieurs encoches en creux dans sa face externe et réparties autour de l'axe principal, adaptées à guider le coulissement des doigts du baladeur de sélection et du baladeur de verrouillage ;
- ledit moyen d'éjection est adapté à mécaniquement déplacer le baladeur de verrouillage après que le baladeur de sélection a été déplacé jusqu'à la position couplée à l'autre des pignons fous ;
- chaque pignon fou présente une rampe et ledit moyen d'éjection comporte sur le baladeur de verrouillage au moins deux rampes adaptées à venir glisser contre la rampe de l'un quelconque des pignons fous après que le baladeur de sélection a été déplacé jusqu'à la position couplée à l'autre des pignons fous ;
- le baladeur de verrouillage comporte des moyens d'indexation adaptés à le bloquer selon l'axe principal (de préférence par rapport au moyeu) lorsque le moyen d'éjection est inactif ;
- les moyens d'indexation comprennent, sur l'un des baladeur de verrouillage et moyeu, au moins un élément en saillie, préférentiellement un élément roulant, qui navigue dans une rainure lors du passage du baladeur de verrouillage d'une position couplée à l'autre, ladite rainure présentant une profondeur variable et étant prévue en creux dans l'autre des baladeur de verrouillage et moyeu ;
- le baladeur de sélection et le baladeur de verrouillage sont conformés de telle manière que, pour passer d'une position couplée à l'autre, le baladeur de sélection parcourt une distance strictement supérieure à la distance parcourue par le baladeur de verrouillage pour passer d'une position couplée à l'autre, de préférence deux fois supérieure.

L'invention concerne aussi un réducteur de vitesse comportant un arbre primaire qui porte des pignons fixes par rapport à lui, et un dispositif de couplage tel que précité, dont les pignons fous engrènent lesdits pignons fixes.

L'invention concerne aussi un véhicule automobile comportant une machine électrique, un différentiel, des roues motrices couplées au différentiel, et entre la machine électrique et le différentiel, un limiteur de couple dont une entrée est couplée à la machine électrique, un réducteur de vitesse tel que précité dont l'un des arbres primaire et principal est couplé à la sortie du limiteur de couple et dont l'autre des arbres primaire et principal est couplé au différentiel.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un réducteur de vitesses comportant un dispositif de couplage d'arbres conforme à l'invention ;
[Fig. 2] est une vue schématique en perspective éclatée du système de crabotage du dispositif de couplage de la figure 1 ;
[Fig. 3] est une vue schématique en perspective éclatée de l'un des pignons fous et du baladeur de sélection du dispositif de couplage de la figure 1 ;
[Fig. 4] est une vue schématique représentant sous des angles différents les deux pignons fous et le système de crabotage du dispositif de couplage de la figure 1 ;
[Fig. 5] est une vue schématique représentant les crabots d'un premier pignon fou, le système de crabotage et le second pignon fou du dispositif de couplage de la figure 1 , vus sous un premier angle, lorsque le premier pignon fou est craboté ;
[Fig. 6] est une vue schématique représentant le système de crabotage et les crabots du second pignon fou du dispositif de couplage de la figure 1, vus sous un second angle, lors d'un changement de rapport de vitesses ;
[Fig. 7] est une vue schématique homologue de celle de la figure 5, lors du changement de rapport de vitesses ;
[Fig. 8] est une vue schématique illustrant le premier pignon fou avec en particulier un de ses crabots et le baladeur de verrouillage du dispositif de couplage de la figure 1 , lors du changement de rapport de vitesses ; et
[Fig. 9] représente cinq vues schématiques du système de crabotage en coupe cylindrique (la partie le plus extérieure du système a été coupée), illustrant cinq états successifs pris par le système lors du changement de rapport de vitesses.

Dans la suite de la description, le terme « couplé » sera utilisé pour désigner une liaison entre deux éléments qui permet de transmettre un couple de l'un à l'autre de ces éléments.

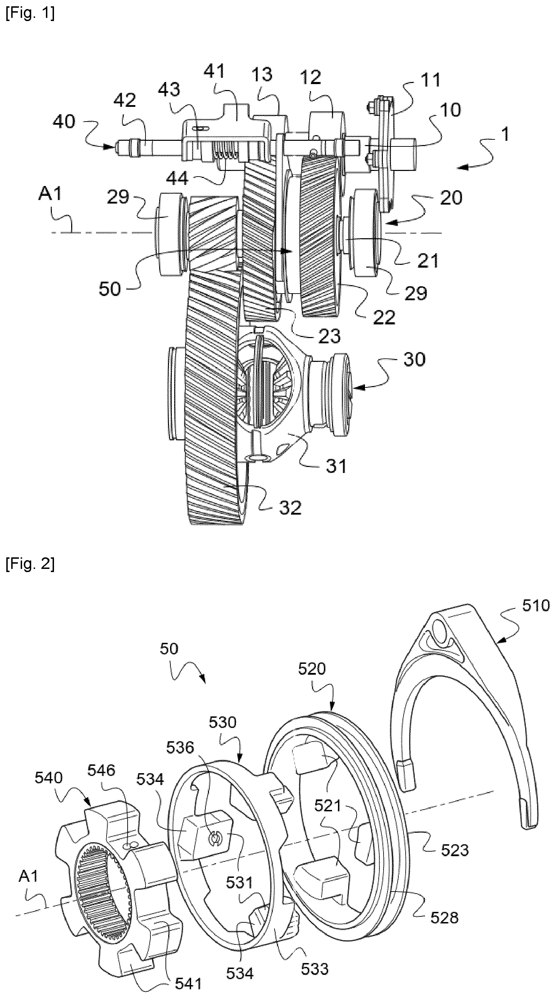

Sur la figure 1, on a représenté un réducteur de vitesse 1 bi-rapport à prise constante.

Ce réducteur de vitesse 1 est qualifié de bi-rapport en ce sens qu'il permet d'offrir exactement deux rapports de réduction de vitesse, ce qui est parfait pour une utilisation dans un véhicule automobile. Il est dit « à prise constante » en ce sens qu'il transmet toujours un couple et ne présente donc pas de position neutre stable dans laquelle les arbres sont découplés l'un de l'autre.

Ce réducteur de vitesse 1 est de préférence prévu pour être installé dans un véhicule automobile, mais il pourrait être employé dans d'autres domaines (robotique, aviation...).

On considérera que le véhicule automobile dans lequel ce réducteur est installé comporte :
- une machine électrique, appelée ci-après moteur électrique bien qu'on pourrait l'utiliser comme alternateur,
- des roues, typiquement au nombre de quatre et parmi lesquelles deux sont par exemple motrices,
- un différentiel 30 qui s'interpose entre les deux roues motrices.

Le réducteur de vitesse 1 est alors placé entre le moteur électrique et le différentiel 30 afin de pouvoir transmettre le couple moteur aux roues (ou inversement).

Il comporte un carter (non représenté) qui loge différents composants.

Comme le montre la figure 1 , ce réducteur de vitesse 1 comporte deux étages d'arbres logés dans le carter. Il comporte ainsi un arbre primaire 10 qui est couplé à l'arbre du moteur électrique, et un arbre principal 21 qui est couplé au différentiel 30 (l'inverse serait également envisageable).

L'arbre primaire 10 pourrait être directement couplé à l'arbre du moteur électrique. Toutefois, de manière préférentielle et pour des raisons détaillées ci-après, un limiteur de couple 11 s'interpose ici entre ces deux arbres afin de faciliter le passage de vitesses.

L'arbre primaire 10 porte deux pignons fixes 12, 13, c'est-à-dire deux pignons qui tournent toujours à la même vitesse que celle de l'arbre primaire. Ces deux pignons fixes 12, 13 présentent des diamètres différents pour offrir des rapports de vitesse distincts.

L'arbre principal 21 s'étend selon un axe principal A1 parallèle à l'axe de l'arbre primaire 10. Il est pour cela engagé à ses deux extrémités dans des roulements 29.

Cet arbre principal 21 porte deux pignons fous 22, 23 qui engrènent respectivement les deux pignons fixes 12, 13. Ces pignons sont qualifiés de fous en ce sens qu'ils sont montés libres en rotation sur cet arbre autour de l'axe principal A1 et qu'ils sont bloqués en translation selon cet axe.

On observe sur la figure 1 que cet arbre principal 21 porte également un pignon fixe engrené avec un pignon du différentiel 30.

Pour transmettre le couple de l'arbre primaire 10 à l'arbre principal 21, il est prévu un système de crabotage 50 des pignons fous 22,23. Ce système de crabotage 50 permet de coupler l'un ou l'autre des pignons fous avec l'arbre principal 21, selon le rapport de vitesses engagé.

Ce système de crabotage 50, qui fait plus précisément l'objet de la présente invention, comporte quatre composants principaux illustrés sur la figure 2.

Il comporte ainsi un moyeu 540 qui est couplé à l'arbre principal 21 , deux baladeurs dits de sélection 520 et de verrouillage 530, et un organe de sélection 510 permettant de déplacer le baladeur de sélection 520.

On pourrait prévoir que le moyeu 540 vienne de formation avec l'arbre principal 21. Toutefois, ici, le moyeu 540 est une pièce indépendante de l'arbre principal 21. Il présente alors une ouverture centrale par laquelle il est enfilé sur cet arbre, dont le bord présente des cannelures ou dentelures engagées dans des reliefs prévus en correspondance sur l'arbre principal 21 afin de coupler ce moyeu 540 à l'arbre principal 21.

Les deux baladeurs de sélection 520 et de verrouillage 530 sont alors montés par rapport au moyeu 540 de façon à être mobiles en translation selon l'axe principal A1 mais bloqués en rotation autour de cet axe. Ils permettent ainsi de venir craboter l'un ou l'autre des pignons fous 22, 23 de façon à coupler ce pignon fou à l'arbre principal 21.

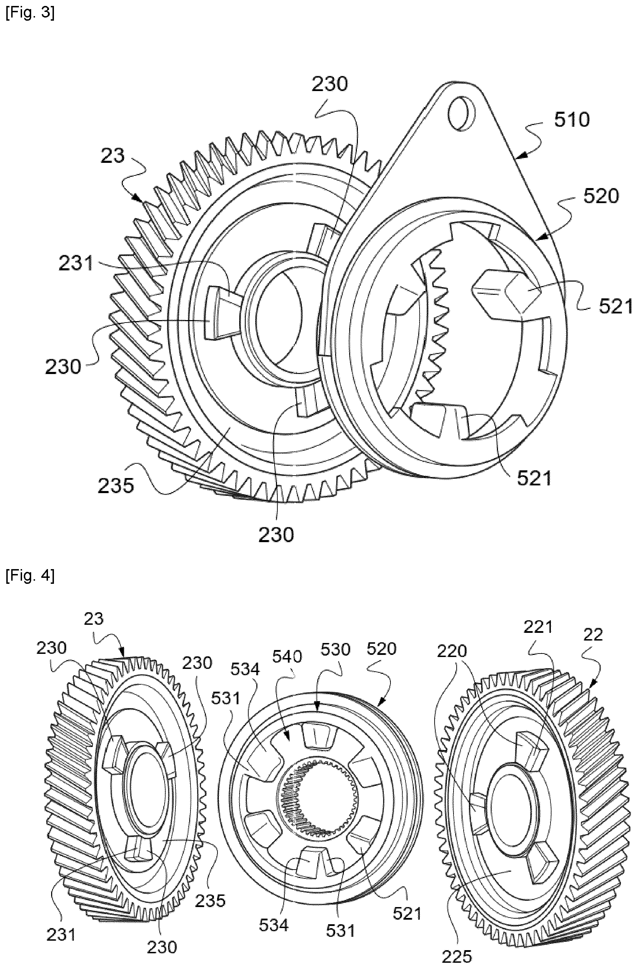

Comme le montrent bien les figures 3 et 4, ces pignons fou 22, 23 comportent classiquement chacun un disque principal 225, 235 qui présente une ouverture centrale, ici bordée par une couronne, pour son montage sur l'arbre principal 21 et qui est bordée extérieurement par une denture permettant son engrenage avec l'un des pignons fixes 12, 13. Pour permettre son crabotage, chaque pignon fou 22, 23 comporte au moins un crabot 220, 230, c'est-à-dire un relief qui fait ici saillie de l'une des faces du disque principal 225, 235 (celle tournée vers l'autre pignon fou) et par lequel le pignon fou peut être entraîné en rotation.

Il est ici prévu exactement trois crabots 220, 230 sur chaque pignon fou 22, 23, qui sont régulièrement répartis autour de l'axe principal A1 , à 120° les uns des autres.

Ici, chaque crabot 220, 230 s'étend sur un secteur angulaire restreint, d'environ 30° et présente sensiblement une forme de prisme dont la base est située sur la face précitée du disque principal 225, 235. Chaque crabot présente ainsi quatre faces latérales et une face d'extrémité tournée vers l'autre pignon fou.

La face latérale interne (située du côté de l'axe principal A1) est ici incurvée autour de cet axe, et il en va de même de la face latérale externe. Les deux autres faces latérales (ci-après appelées faces radiales) s'étendent chacune au moins en partie dans un plan radial (c'est-à-dire dans un plan contenant l'axe principal A1).

On observe que la face principale se raccorde à la plupart des faces latérales par des congés. Toutefois, elle se raccorde à l'une seulement des deux faces radiales par un méplat incliné formant une rampe 231 , dont la fonction apparaîtra clairement ci-après.

On notera ici que les rampes 221, 231 des trois crabots 220, 230 de chaque pignon fou 22, 23 sont orientées dans un même sens autour de l'axe principal A1 , et que ce sens est opposé au sens selon lequel les rampes des crabots de l'autre pignon fou sont orientées.

On notera également les rampes 221, 231 s'étendent sur une partie seulement de l'épaisseur des crabots 220, 230.

Comme le montre la figure 2, le baladeur de sélection 520 et le baladeur de verrouillage 530 présentent tous deux des formes annulaires telles qu'ils peuvent être emboîtés l'un dans l'autre (le baladeur de sélection 520 étant situé à l'extérieur du baladeur de verrouillage 530).

Le baladeur de verrouillage 530 comporte ainsi un corps annulaire 533 dont le diamètre intérieur est ajusté au diamètre extérieur du moyeu 540 si bien qu'il peut librement coulisser sur celui-ci, parallèlement à l'axe principal A1.

De la même façon, le baladeur de sélection 520 comporte un corps annulaire 523 dont le diamètre intérieur est ajusté au diamètre extérieur du corps annulaire 533 du baladeur de verrouillage 530 de manière qu'il peut coulisser librement sur ce dernier, parallèlement à l'axe principal A1. On notera que le baladeur de verrouillage 530 comporte alors une face externe cylindrique de révolution et lisse.

Ces deux baladeurs sont bloqués en rotation autour de l'axe principal A1 par rapport à l'arbre principal 21 grâce au moyen 540.

Pour cela, comme le montre la figure 2, le moyeu 540 présente une forme crantée dite « en tulipe ». Ainsi, s'il présente une épaisseur constante selon l'axe principal A1 , le moyeu 540 présente une face extérieure qui n'est pas cylindrique mais qui présente plusieurs renfoncements, ici identiques, régulièrement répartis autour de l'axe principal A1. Ces renfoncements forment donc des crans 541 grâce auxquels les deux baladeurs sont bloqués en rotation.

Chaque cran 541 est profilé en ce sens que sa section transversale (c'est-à-dire sa section dans un plan orthogonal à l'axe principal A1) est uniforme le long de l'axe principal A1. Cette section transversale présente ici une forme de U, de sorte que chaque cran présente un fond plat bordé de deux faces latérales planes s'étendant dans des plans radiaux. Il est ici prévu six crans 541 identiques.

Le baladeur de verrouillage 530 comporte en correspondance au moins un doigt adapté à coulisser dans l'un des crans 541. Il en comporte en pratique exactement trois qui sont régulièrement répartis autour de l'axe principal A1 et dont les sections transversales sont uniformes et présentent des formes identiques, en négatif, à celles des crans 541. Ces doigts 531 sont fixés sur la face interne du corps annulaire 533 de ce baladeur. Ils présentent ainsi des faces radiales qui coulissent contre les faces radiales des crans 541 pour bloquer tout mouvement de rotation de ce baladeur par rapport au moyeu 540.

De la même façon, le baladeur de sélection 520 comporte au moins un doigt adapté à coulisser dans l'un des crans 541 délimités par le moyeu 540. Il en comporte en pratique exactement trois qui sont régulièrement répartis autour de l'axe principal A1 et dont les sections transversales sont uniformes et présentent des formes identiques, en négatif, à celles des crans 541. Ces doigts 531 s'étendent à distance de la face interne du corps annulaire 523 de ce baladeur, dont on rappelle qu'elle coulisse le long de la face externe du corps annulaire 533 de l'autre baladeur. En pratique, ils sont raccordés à cette face interne par une de leurs extrémités seulement. Les doigts 521 présentent des faces radiales qui coulissent contre les faces radiales des crans 541 pour bloquer tout mouvement de rotation de ce baladeur par rapport au moyeu 540.

Les deux baladeurs sont donc libres de coulisser entre les pignons fous 22, 23, entre deux positions extrêmes, à savoir une position couplée à un premier des pignons fous, et une position couplée à l'autre des pignons fous.

Dans la suite de la description, le premier pignon fou 23 désignera par exemple celui permettant d'établir un premier rapport de vitesses, tandis le second pignon fou 22 désignera celui permettant d'établir un second rapport de vitesses.

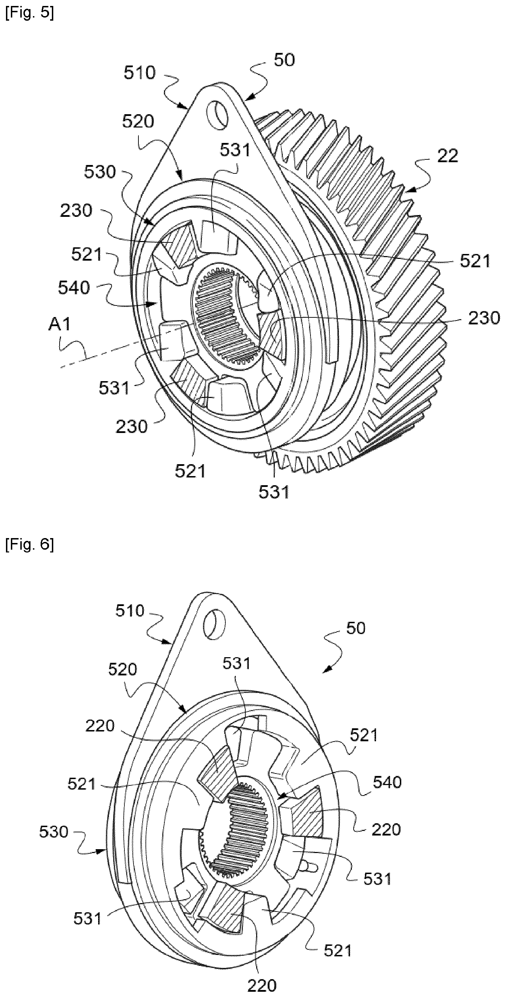

Comme le montre la figure 5 sur laquelle seuls les crabots 230 du premier pignon fou 23 ont été représentés, lorsqu'un rapport de vitesse est engagé (le premier rapport sur cette figure 5), les deux baladeurs de sélection 520 et de verrouillage 530 sont en position couplée.

Dans cette position, les premières extrémités de leurs doigts 521, 531 viennent se positionner de part et d'autre de chaque crabot 230 du pignon fou 23 correspondant de telle sorte que les faces radiales des crabots se trouvent au contact des faces radiales correspondantes des doigts 521, 531 des baladeurs. Ainsi le moyeu 540 se trouve-t-il bloqué en rotation par rapport à ce pignon fou 23.

On notera ici que les faces en contact des doigts et des crabots étant radiales (c'est-à-dire s'étendent dans des plans sensiblement radiaux par rapport à l'axe principal A1), la transmission de couple peut se faire sans difficulté. Bien entendu, ces différentes faces pourraient en variante ne pas être exactement radiales.

La première extrémité de chaque doigt 521 du baladeur de sélection 520 (celle tournée du côté du premier pignon fou 23) s'étend à une distance de la seconde extrémité de ce doigt qui est inférieure à la distance séparant les faces d'extrémité des deux crabots 220, 230, si bien que ce baladeur ne peut pas simultanément craboter les deux pignons fous 22, 23. En pratique, cette distance est sensiblement égale à l'épaisseur du moyeu 540 (selon l'axe principal A1).

Il est donc nécessaire de le déplacer pour passer un rapport de vitesses.

Le baladeur de sélection 520 est prévu pour être déplacé d'une position couplée à l'autre au moyen de l'organe de sélection 510. Comme le montre bien la figure 2, cet organe de sélection 510 comporte ici une unique fourchette qui est engagée dans une gorge 528 délimitée par deux nervures périphériques prévues en saillie de la face externe du baladeur de sélection 520.

Ainsi, en déplaçant l'organe de sélection 510 le long de l'axe principal A1, il est possible de placer les doigts 521 du baladeur de sélection 520 en appui contre les crabots 220, 230 de l'un ou l'autre des pignons fous 22, 23 afin de passer un rapport de vitesses.

Le baladeur de verrouillage 530 n'est pour sa part pas commandé. Aucune fourchette ne lui est donc associée. Il est prévu pour se déplacer automatiquement et mécaniquement d'une position couplée à l'un quelconque des pignons fous à une position couplée à l'autre pignon fou après que le baladeur de sélection 520 a été déplacé jusqu'en position couplée à cet autre pignon fou (à la faveur de ce déplacement).

Pour cela, comme le montre bien la figure 2, les faces d'extrémités 534 des doigts 531 de ce baladeur de verrouillage 530 s'étendent dans des plans qui ne sont pas orthogonaux à l'axe de rotation A1 mais qui sont inclinés par rapport à celui-ci, afin de former des rampes de pentes conjuguées avec les pentes des rampes 221 , 231 des crabots.

Ainsi les faces d'extrémités 534 des doigts 531 s'étendent-elles parallèlement aux rampes 221 , 231 des crabots 220, 230 qui leurs font face.

L'angle d'inclinaison d'une pente par rapport à un plan orthogonal à l'axe principal A1 est de préférence compris entre 5 et 45 degrés. Il est ici de 20 degrés.

Les deux faces d'extrémités 534 de chaque doigt 531 s'étendent ici dans des plans parallèles.

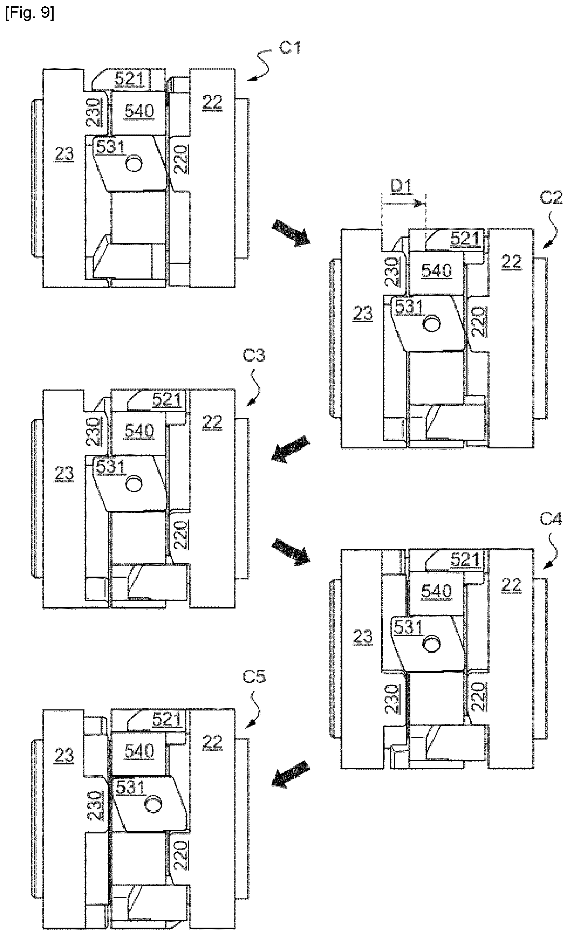

La première extrémité de chaque doigt 531 du baladeur de verrouillage 530 (celle tournée du côté du premier pignon fou 23) s'étend à une distance de la seconde extrémité de ce doigt qui est strictement supérieure à la distance séparant les faces d'extrémité des deux crabots 220, 230 (voir figure 9). Cette distance est par ailleurs inférieure à la somme de l'épaisseur d'un crabot et de l'épaisseur du moyeu. Ainsi, les doigts 531 du baladeur de verrouillage 530 sont toujours placées sur le passage des crabots de l'un et/ou l'autre des pignons fous.

Par conséquent, le baladeur de verrouillage 530 présente une épaisseur totale, mesurée selon l'axe principal A1 , supérieure à celle du moyeu 540.

A ce stade, on peut décrire comment le crabotage d'un pignon fou s'effectue. Sur la figure 9, on a représenté cinq configuration C1 - C5 successivement prises par le système.

Comme le montre la figure 5, on peut partir de la situation dans laquelle le premier pignon fou 23 est initialement couplé à l'arbre principal 21 grâce aux deux baladeurs.

Comme cela a été expliqué, dans cette configuration C1 (illustrée sur la figure 9), les crabots 230 du premier pignon fou 23 sont pris en sandwich entre les doigts 521 , 531 de ces deux baladeurs. Les faces en appui des doigts contre chaque crabot sont radiales, si bien que cet appui garantit un bon passage de couple.

En pratique, lorsque le premier rapport de vitesses est engagé, c'est le baladeur de verrouillage 530 qui transmet le couple à l'arbre principal 21 (lorsque le couple est positif). Ainsi, les efforts s'appliquant sur le baladeur de sélection restent restreints, notamment en phase d'accélération juste avant de passer le second rapport.

A ce stade, les crabots 220 du second pignon fou 22 sont laissés libres puisque rien n'entrave leur liberté de pivoter sur l'arbre principal 21. Ainsi, ce pignon fou 22 tourne à une vitesse différente de celle du premier pignon fou 23, du fait que ces deux pignons fous sont engrenés dans des pignons fixes 12, 13 de diamètres différents. En l'espèce, ce second pignon fou 22 tourne plus vite que le premier pignon fou 23.

Pour le passage d'un rapport de vitesses, l'organe de sélection 510 fait coulisser le baladeur de sélection 520 depuis sa position couplée au premier pignon fou 23 (figure 5) à la position couplée au second pignon fou 22 (figure 6 et configuration C2 sur la figure 9). La distance de coulissement du baladeur de sélection 520 est ici notée D1. Ce coulissement se fait sans effort puisque, comme cela a été expliqué supra, le couple est transmis par le baladeur de verrouillage.

Lors de ce passage, le baladeur de sélection 520 tourne initialement moins vite que le second pignon fou 22. Mais grâce à l'écartement angulaire important entre deux crabots 220 successifs, les deuxièmes extrémités de ses doigts 521 peuvent se glisser dans l'espace laissé entre deux crabots. La vitesse de déplacement de l'organe de sélection 510 est alors suffisamment rapide pour que le crabotage se fasse rapidement.

On comprend que ce crabotage peut être légèrement brutal puisqu'il va imposer une forte décélération au second pignon fou 22 et donc à l'arbre primaire 10. C'est la raison pour laquelle il est de préférence prévu un limiteur de couple entre le moteur électrique et l'arbre primaire 10.

En d'autres termes, lorsque le crabotage s'effectue, l'arbre primaire 10 est ralenti par le second pignon fou 22 dont les crabots 220 viennent s'appuyer pour cela contre les doigts 521 du baladeur de sélection 520, lequel présente une vitesse de rotation imposée par la vitesse d'avancement du véhicule automobile. Cette configuration C3 est illustrée sur la figure 9. On notera ici que l'accostage des crabots 220 contre les doigts 521 du baladeur de sélection 520 se fait sans rebond ou avec des rebonds d'amplitudes très réduites (fonctions des dentures). Ainsi, comme le montre très bien la figure 9, les doigts 531 du baladeur de verrouillage 530 se trouvent alors décalés par rapport aux crabots 220 du second pignon fou 22.

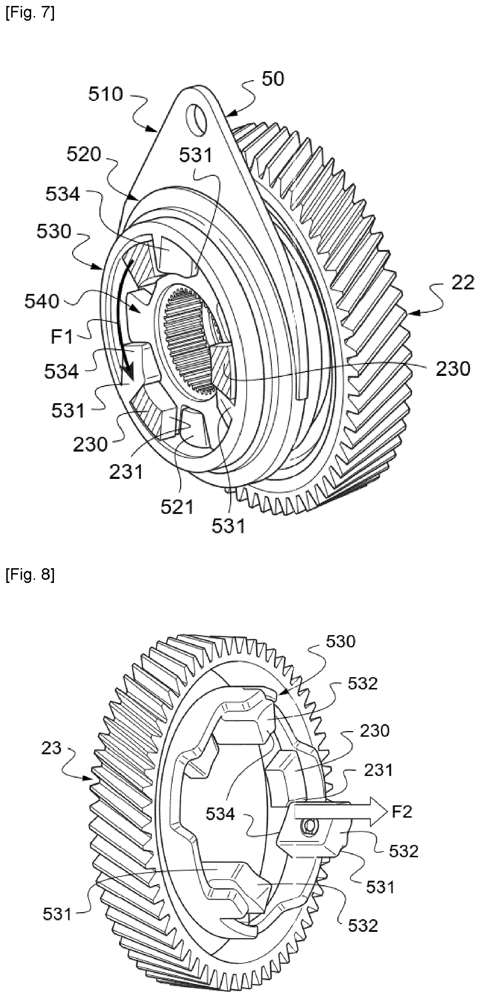

Le ralentissement de l'arbre primaire 10 provoque le ralentissement du premier pignon fou 21. Du fait de ce ralentissement, comme le montre la flèche F1 sur figure 7, les crabots 230 du premier pignon fou 23 qui ne sont plus tenus par les doigts 521 du baladeur de sélection 520 vont se déplacer angulairement jusqu'à venir au contact par leurs rampes 231 contre les faces d'extrémité 534 en forme de rampes conjuguées des doigts 531 du baladeur de verrouillage 530, dans la configuration C4 illustrée sur la figure 9.

Cet appui mécanique génère une force de réaction dont une composante axiale, représentée sur la figure 8 par la flèche F2, force le baladeur de verrouillage 530 à se déplacer vers le second pignon fou 22. Ce déplacement permet aux doigts 531 de ce baladeur de verrouillage 530 de venir se placer contre les faces radiales correspondantes des crabots 220 de ce second pignon fou 22, à l'opposé des doigts 521 du baladeur de sélection 520. Dans cette position, homologue à celle représentée sur la figure 5, le second pignon fou 22 est donc bloqué en rotation par rapport au moyeu 540, dans la configuration C5 illustrée sur la figure 9.

La distance de coulissement du baladeur de verrouillage 530 est ici égale à la moitié de la distance de coulissement D1 du baladeur de sélection 520 (ce qui s'explique par les longueurs des doigts du baladeur de sélection, inférieures à celles des doigts du baladeur de verrouillage 530).

A ce stade, lorsque le second rapport de vitesses est engagé, c'est le baladeur de sélection 520 qui transmet le couple à l'arbre principal 21 (lorsque le couple est positif). Ainsi, les efforts s'appliquant sur le baladeur de verrouillage restent restreints.

On notera à ce stade que le blocage d'un pignon fou par deux doigts situés de part et d'autre de chaque crabot est utile notamment en cas d'inversion de couple, c'est-à-dire lorsque le couple aux roues devient plus grand que le couple moteur (par exemple en phase de freinage récupératif où le moteur prend un rôle d'alternateur). Dans cette situation, ce sont en effet les doigts 531 du baladeur de verrouillage 530 qui vont majoritairement être contraints.

On notera également que le passage du rapport de vitesse s'effectue sans synchronisation, en ce sens qu'il n'est pas nécessaire de synchroniser la vitesse de rotation de l'un des baladeurs avec celle du pignon fou à craboter.

Lors d'un passage de rapport de vitesses subséquent, la cinématique sera sensiblement la même que celle expliquée ci-dessus, la seule différence étant que l'arbre primaire 10 ne sera cette fois pas freiné mais accéléré, si bien que l'orientation des rampes devra être inversée, comme cela est d'ailleurs bien illustré sur les figures.

On notera ici que lors d'un passage de première en seconde ou inversement, c'est toujours le baladeur de sélection 520 qui, commandé par l'organe de sélection 510, commence à coulisser avant le baladeur de verrouillage 530. Ce dernier coulisse ensuite, lorsque les crabots du pignon fou l'expulsent vers l'autre pignon fou (celui auquel est couplé le baladeur de sélection).

On notera également que lors d'un tel passage de rapport, le couple transmis à l'arbre principal 21 est sinon réduit, voire négatif, si bien que les efforts s'appliquant sur le baladeur de sélection 520 sont restreints et que la fourchette peut donc facilement le déplacer d'une position couplée à l'autre.

Lors d'un passage de rapport de première en seconde ou inversement, il peut arriver que lorsque l'organe de sélection 510 déplace le baladeur de sélection 520, les doigts de ce dernier viennent buter contre les faces d'extrémité des crabots du pignon fou sélectionné.

Pour éviter toute casse, différentes solutions sont envisageables.

La première solution serait de commander le passage du rapport de vitesses au moment opportun, c'est-à-dire lorsque les crabots sont décalés angulairement par rapport aux doigts du baladeur de sélection. Cette solution n'est pas préférée puisqu'elle nécessiterait de prévoir des capteurs adaptés.

La solution ici adoptée est représentée sur la figure 1. On y observe qu'entre l'actionneur électromécanique qui déplace l'organe de sélection 510 et cet organe, il est prévu un système élastique 40.

En l'espèce, la sortie de l'actionneur est ici fixée à un étrier 41 en U dont les deux bras en formes d'arches chevauchent un arbre de sélection 42 qui est fixé à la fourchette formant organe de sélection 510. Cet arbre de sélection 42 comporte une partie centrale de section réduite, au niveau de laquelle des coulisses 43 sont montées mobiles en translation, entre les deux bras de l'étrier 41. Ces deux coulisses 43 sont maintenues à distance l'une de l'autre par un ressort 44. Ainsi, lorsque l'actionneur déplace l'étrier 41 et que la fourchette est bloquée en position (par les crabots sur lesquels butent les extrémités des doigts du baladeur de sélection 520), le ressort se comprime si bien que l'étrier peut continuer de se déplacer.

Pour éviter qu'un tel contact intervienne trop souvent et qu'il ne perdure trop longtemps, comme le montre bien la figure 2, on peut prévoir que les faces d'extrémité des doigts 521 du baladeur de sélection 520 soient inclinées (et non pas orthogonal à l'axe principal A1).

A l'issue d'un passage de rapport de vitesses, il convient d'éviter que le baladeur de verrouillage 530 ne reparte en direction opposée.

Ainsi, il est préférentiellement prévu des moyens pour maintenir en position fixe le baladeur de verrouillage 530 lorsqu'un rapport de vitesses est enclenché et qu'il n'est pas prévu de passer un nouveau rapport de vitesses.

Il s'agit ici de moyens d'indexation. Ces moyens d'indexation sont prévus pour maintenir le baladeur de verrouillage 530 en position fixe par rapport au moyeu 540 tant qu'aucune force n'est exercée par la fourchette sur le baladeur de section 520 selon l'axe principal A1 pour rechanger de rapport de vitesses.

Comme le montre la figure 2, ce moyen d'indexation se présente ici sous la forme de billes 536 retenues dans des logements prévus en creux dans la face interne des doigts 531 du baladeur de verrouillage 530. Il est ici prévu trois billes respectivement situées dans les trois doigts 531.

Ces billes 536 sont retenues dans ces logements de manière à ne pas pouvoir s'en échapper mais à être rappelées vers l'extérieur. Des moyens de rappel élastique tels que des ressorts sont employés à cet égard.

Comme le montre bien la figure 2, ces moyens d'indexation comportent par ailleurs, en creux dans la surface externe du moyeu 540, au fond de trois des crans 541, des rainures 546 dans lesquelles les billes 536 précités peuvent venir naviguer lors d'un passage de rapport de vitesses.

Chaque rainure 546 présente une profondeur identique à ses deux extrémités, mais une épaisseur réduite entre ces deux extrémités. Ainsi les billes sont-elles naturellement retenues au niveau des extrémités de ces rainures 546, dans des positions où le baladeur de verrouillage est couplé à l'un des pignons fous 22, 23.

Les moyens de rappel élastique des billes vers l'extérieur permettent ainsi de bloquer dans une certaine mesure le baladeur de verrouillage 530 par rapport au moyeu 540 sans toutefois empêcher ce baladeur de coulisser par rapport au moyeu 540 lors d'un passage de rapport de vitesses.

A ce stade, on peut noter que lors d'un passage du premier rapport vers le second rapport, il n'y aura pas de rupture de couple. Le transfert de couple en accélération s'effectue en effet initialement via les doigts du baladeur de verrouillage 530, si bien que le baladeur de sélection 520 peut être désengagé sous charge par l'organe de sélection 510.

Lors d'un passage du second rapport vers le premier rapport, il est en revanche nécessaire de réaliser une décroissance de couple exercé par la machine électrique, mais une telle décroissance est naturelle puisqu'on effectue ce passage de rapport lorsque le régime de la machine électrique décroît.

Le verrouillage du rapport sélectionné est réalisé sur un temps très cours qui est fonction de l'écart de vitesses de rotation entre les pignons de première et seconde lors du passage de rapport. A titre d'exemple, un écart de vitesses de rotation de 3000 tr/min conduit à un temps de verrouillage inférieur 0,01 seconde.

De manière préférentielle, le passage d'un rapport de vitesse sera automatiquement commandé dès que la vitesse de l'arbre principal dépassera un premier seuil prédéterminé ou repassera en dessous d'un second seuil, légèrement inférieur au premier (par exemple compris entre 90 et 98% du premier seuil).

De cette manière, il sera possible de dimensionner le limiteur de couple de manière qu'il exerce au mieux sa fonction, compte tenu de la vitesse de rotation à laquelle il interviendra.

La présente invention n'est nullement limitée au mode de réalisation décrit et représenté, mais l'homme du métier saura y apporter toute variante conforme à l'invention.

Typiquement, il sera possible d'employer, en lieu et place du limiteur de couple (passif), un système actif tel qu'un embrayage piloté.

## Revendications

1. Dispositif de couplage (20) d'arbres, comportant:
- un arbre principal (21) orienté selon un axe principal (A1),
- deux pignons fous (22, 23) montés libres en rotation sur l'arbre principal (21) autour de l'axe principal (A1), chaque pignon fou (22, 23) comportant au moins un crabot (220, 230) tourné vers l'autre pignon fou (22, 23), et
- un système de couplage (50) interposé entre les deux pignons fous (22, 23), qui comporte:
∘ un moyeu (540) solidaire en rotation de l'arbre principal (21),
∘ un baladeur de sélection (520) monté coulissant par rapport au moyeu (540) selon ledit axe principal (A1) entre une position couplée à l'un des pignons fous (22, 23) et une position couplée à l'autre des pignons fous (22, 23),
∘ un organe (510) de déplacement du baladeur de sélection (520) de l'une à l'autre des deux positions couplées,
∘ un baladeur de verrouillage (530) monté coulissant par rapport au moyeu (540) selon ledit axe principal (A1) entre une position couplée à l'un des pignons fous (22, 23) et une position couplée à l'autre des pignons fous (22, 23),
**caractérisé en ce que** :
∘ le baladeur de sélection (520) et le baladeur de verrouillage (530) comportent des doigts (521, 531) adaptés à craboter les crabots (220, 230) des pignons fous (22, 23) de manière que, lorsque le baladeur de sélection (520) et le baladeur de verrouillage (530) sont en position couplée à un même desdits pignons fous (22, 23), leurs doigts (521, 531) prennent chaque crabot (220, 230) dudit pignon fou (22, 23) en sandwich,
∘ il est prévu un moyen d'éjection (534) adapté à automatiquement et mécaniquement déplacer le baladeur de verrouillage (530) d'une position couplée à un premier quelconque des pignons fous (22, 23) à l'autre des pignons fous (22, 23) après que le baladeur de sélection (520) a été déplacé de la position couplée au premier des pignons fous (22, 23) à la position couplée à l'autre des pignons fous (22, 23),
∘ chaque pignon fou (22, 23) présente une rampe (221, 231) et ledit moyen d'éjection (534) comporte sur le baladeur de verrouillage (530) au moins deux rampes (531) adaptées à venir glisser contre la rampe (221, 231) de l'un quelconque des pignons fous (22, 23) après que le baladeur de sélection (520) a été déplacé jusqu'à la position couplée à l'autre des pignons fous (22, 23).

2. Dispositif de couplage (20) selon la revendication 2, dans lequel chaque pignon fou (22, 23) comporte un nombre de crabots (220, 230) régulièrement répartis autour de l'axe principal (A1) qui est supérieur ou égal à deux, et dans lequel le baladeur de sélection (520) et le baladeur de verrouillage (530) comportent un nombre identique de doigts régulièrement répartis autour de l'axe principal (A1).

3. Dispositif de couplage (20) selon la revendication 3, dans lequel l'espace angulaire autour de l'axe principal (A1) délimité entre deux crabots (220, 230) est strictement supérieur à deux fois l'espace angulaire autour de l'axe principal (A1) occupé par un doigt (521) du baladeur de sélection (520).

4. Dispositif de couplage (20) selon l'une des revendications 2 à 4, dans lequel le moyeu (540) présente plusieurs encoches en creux dans sa face externe et réparties autour de l'axe principal (A1), adaptées à guider le coulissement des doigts (521, 531) du baladeur de sélection (520) et du baladeur de verrouillage (530).

5. Dispositif de couplage (20) selon l'une des revendications 1 à 7, dans lequel le baladeur de verrouillage (530) comporte des moyens d'indexation (536) adaptés à bloquer le baladeur de verrouillage (530) selon l'axe principal (A1) lorsque le moyen d'éjection (534) est inactif.

6. Dispositif de couplage (20) selon la revendication 8, dans lequel les moyens d'indexation (536) comprennent, sur l'un des baladeur de verrouillage (530) et moyeu (540), au moins un élément en saillie, préférentiellement un élément roulant, qui navigue dans une rainure (546) lors du passage du baladeur de verrouillage (530) d'une position couplée à l'autre, ladite rainure (546) présentant une profondeur variable et étant prévue en creux dans l'autre des baladeur de verrouillage (530) et moyeu (540).

7. Dispositif de couplage (20) selon l'une des revendications 1 à 9, dans lequel le baladeur de sélection (520) et le baladeur de verrouillage (530) sont conformés de telle manière que, pour passer d'une position couplée à l'autre, le baladeur de sélection (520) parcourt une distance strictement supérieure à la distance parcourue par le baladeur de verrouillage (530) pour passer d'une position couplée à l'autre, de préférence deux fois supérieure.

8. Réducteur de vitesse (1) comportant un arbre primaire (10) qui porte des pignons fixes (12, 13), **caractérisé en ce qu'**il comporte en outre un dispositif de couplage (20) conforme à l'une des revendications 1 à 10, dont les pignons fous (22, 23) engrènent lesdits pignons fixes (12, 13).

9. Véhicule automobile comportant une machine électrique, un différentiel (30) et des roues motrices couplées au différentiel (30), **caractérisé en ce qu'**il comporte en outre, entre la machine électrique et le différentiel (30), un limiteur de couple (11) dont une entrée est couplée à la machine électrique, un réducteur de vitesse (1) conforme à la revendication 11, dont l'un des arbres primaire (10) et principal (21) est couplé à la sortie du limiteur de couple (11) et dont l'autre des arbres primaire (10) et principal (21) est couplé au différentiel (30).

## Patentansprüche

1. Kopplungsvorrichtung (20) für Wellen, umfassend:
- eine Hauptwelle (21), die entlang einer Hauptachse (A1) ausgerichtet ist,
- zwei frei drehbar auf der Hauptwelle (21) um die Hauptachse (A1) montierte Winkelzahnräder (22, 23), wobei jedes Winkelzahnrad (22, 23) mindestens eine dem anderen Winkelzahnrad (22, 23) zugewandte Klaue (220, 230) umfasst, und
- ein Kopplungssystem (50), das zwischen den beiden Winkelzahnrädern (22, 23) angeordnet ist und Folgendes umfasst:
∘ eine drehbar an der Hauptwelle (21) befestigte Nabe (540),
∘ einen Wählschieber (520), der in Bezug auf die Nabe (540) entlang der Hauptachse (A1) zwischen einer mit einem der Winkelzahnräder (22, 23) gekoppelten Position und einer mit dem anderen der Winkelzahnräder (22, 23) gekoppelten Position gleitend montiert ist,
∘ ein Organ (510) zum Bewegen des Wählschiebers (520) von einer der beiden gekoppelten Positionen in die andere,
∘ einen Verriegelungsschieber (530), der in Bezug auf die Nabe (540) entlang der Hauptachse (A1) zwischen einer mit einem der Winkelzahnräder (22, 23) gekoppelten Position und einer mit dem anderen der Winkelzahnräder (22, 23) gekoppelten Position gleitend montiert ist,
**dadurch gekennzeichnet, dass**:
∘ der Wählschieber (520) und der Verriegelungsschieber (530) Finger (521, 531) aufweisen, die geeignet sind, in die Klauen (220, 230) der Winkelzahnräder (22, 23) einzugreifen, sodass, wenn sich der Wählschieber (520) und der Verriegelungsschieber (530) in gekuppelter Position mit demselben der Winkelzahnräder (22, 23) befinden, ihre Finger (521, 531) jede Klaue (220, 230) des Winkelzahnrads (22, 23) einklemmen,
∘ wobei ein Auswurfmittel (534) vorgesehen ist, das geeignet ist, den Verriegelungsschieber (530) automatisch und mechanisch von einer mit einem der ersten Winkelzahnräder (22, 23) gekoppelten Position zum anderen Winkelzahnrad (22, 23) zu bewegen, nachdem der Wählschieber (520) von der mit dem ersten Winkelzahnrad (22, 23) gekoppelten Position in die mit dem anderen Winkelzahnrad (22, 23) gekoppelte Position bewegt wurde,
∘ wobei jedes Winkelzahnrad (22, 23) eine Rampe (221, 231) aufweist und das Auswurfmittel (534) auf dem Verriegelungsschieber (530) mindestens zwei Rampen (531) aufweist, die dazu geeignet sind, gegen die Rampe (221, 231) eines der Winkelzahnrad (22, 23) zu gleiten, nachdem der Wählschieber (520) in die mit dem anderen Winkelzahnrad (22, 23) gekoppelte Position bewegt wurde.

2. Kopplungsvorrichtung (20) nach Anspruch 2, wobei jedes Winkelzahnrad (22, 23) eine Anzahl von gleichmäßig um die Hauptachse (A1) verteilten Klauen (220, 230) umfasst, die größer oder gleich zwei ist, und wobei der Wählschieber (520) und der Verriegelungsschieber (530) eine gleiche Anzahl von gleichmäßig um die Hauptachse (A1) verteilten Fingern aufweisen.

3. Kopplungsvorrichtung (20) nach Anspruch 3, wobei der Winkelraum um die zwischen zwei Klauen (220, 230) abgegrenzte Hauptachse (A1) strikt größer als das Doppelte des Winkelraums der um die von einem Finger (521) des Wählschiebers (520) eingenommene Hauptachse (A1) ist.

4. Kopplungsvorrichtung (20) nach einem der Ansprüche 2 bis 4, bei der die Nabe (540) mehrere Vertiefungen in ihrer Außenseite aufweist, die um die Hauptachse (A1) verteilt sind und dazu geeignet sind, das Gleiten der Finger (521, 531) des Wählschiebers (520) und des Verriegelungsschiebers (530) zu führen.

5. Kopplungsvorrichtung (20) nach einem der Ansprüche 1 bis 7, wobei der Verriegelungsschieber (530) Indexierungsmittel (536) umfasst, die geeignet sind, den Verriegelungsschieber (530) entlang der Hauptachse (A1) zu blockieren, wenn das Auswurfmittel (534) inaktiv ist.

6. Kopplungsvorrichtung (20) nach Anspruch 8, bei der die Indexierungsmittel (536) an einem der Verriegelungsschieber (530) und der Nabe (540) mindestens ein vorstehendes Element, vorzugsweise ein Rollelement, umfassen, das beim Übergang des Verriegelungsschiebers (530) von einer gekoppelten Position in die andere in einer Kerbe (546) navigiert, wobei die Kerbe (546) eine variable Tiefe aufweist und in dem anderen der Verriegelungsschieber (530) und der Nabe (540) vertieft angeordnet ist.

7. Kopplungsvorrichtung (20) nach einem der Ansprüche 1 bis 9, wobei der Wählschieber (520) und der Verriegelungsschieber (530) dergestalt ausgebildet sind, dass der Wählschieber (520) zum Umschalten von einer gekoppelten Position in die andere eine Strecke zurücklegt, die strikt größer ist als die Strecke, die der Verriegelungsschieber (530) zurücklegt, um von einer gekoppelten Position in die andere zu wechseln, vorzugsweise doppelt so groß ist

8. Untersetzungsgetriebe (1) eine Primärwelle (10) umfassend, die feststehende Ritzel (12, 13) trägt, **dadurch gekennzeichnet, dass** es ferner eine Kupplungsvorrichtung (20) nach einem der Ansprüche 1 bis 10 umfasst, deren Winkelzahnräder (22, 23) mit den feststehenden Ritzeln (12, 13) in Eingriff stehen.

9. Kraftfahrzeug mit einer elektrischen Maschine, ein Differential (30) und mit dem Differential (30) gekoppelten Antriebsräder umfassend, **dadurch gekennzeichnet, dass** es außerdem zwischen der elektrischen Maschine und dem Differential (30) einen Drehmomentbegrenzer (11) umfasst, dessen einer Eingang mit der elektrischen Maschine gekoppelt ist, ein Untersetzungsgetriebe (1) nach Anspruch 11, dessen eine der Primär-(10) und Hauptwelle (21) mit dem Ausgang des Drehmomentbegrenzers (11) gekoppelt ist und dessen andere Primär- (10) und Hauptwelle (21) mit dem Differential (30) gekoppelt ist.

## Claims

1. Shaft coupling device (20), comprising:
- a main shaft (21) oriented along a main axis (A1),
- two idler pinions (22, 23) mounted free to rotate on the main shaft (21) around the main axis (A1), each idler pinion (22, 23) comprising at least one dog (220, 230) turned towards the other idler pinion (22, 23), and
- a coupling system (50) interposed between the two idler pinions (22, 23), which comprises:
∘ a hub (540) integral in rotation with the main shaft (21),
∘ a selection shifter (520) slidably mounted with respect to the hub (540) along said main axis (A1) between a position coupled to one of the idler pinions (22, 23) and a position coupled to the other idle pinion (22, 23),
∘ a member (510) for moving the selection shifter (520) from one to the other of the two coupled positions,
∘ a locking shifter (530) slidably mounted with respect to the hub (540) along said main axis (A1) between a position coupled to one of the idler pinions (22, 23) and a position coupled to the other idler pinion (22, 23),
**characterised in that**:
∘ the selection shifter (520) and the locking shifter (530) comprises fingers (521, 531) adapted to engage the dogs (220, 230) of the idler pinions (22, 23) so that, when the selection shifter (520) and the locking shifter (530) are in position coupled to one and the same idler pinion (22, 23), their fingers (521, 531) sandwich each dog (220, 230) of said idler pinion (22, 23).
∘ ejection means (534) are provided and are adapted to automatically and mechanically move the locking shifter (530) from a position coupled to any one of the idler pinions (22, 23) to the other idler pinion (22, 23) after the selection shifter (520) has been moved from the position coupled to the first idler pinion (22, 23) to the position coupled to the other idler pinion (22, 23),
∘ each idler pinion (22, 23) has a ramp (221, 231) and said ejection means (534) comprises on the locking shifter (530) at least two ramps (531) adapted to slide against the ramp (221, 231) of any one of the idler pinions (22, 23) after the selection shifter (520) has been moved to the position coupled to the other idler pinion (22, 23).

2. Coupling device (20) according to claim 2, wherein each idler pinion (22, 23) comprises a number of dogs (220, 230) evenly distributed around the main axis (A1) that is greater than or equal to two, and wherein the selection shifter (520) and the locking shifter (530) comprise an identical number of fingers evenly distributed around the main axis (A1).

3. Coupling device (20) according to claim 3, wherein the angular space around the main axis (A1) delimited between two dogs (220, 230) is strictly greater than twice the angular space around the main axis (A1) occupied by a finger (521) of the selection shifter (520).

4. Coupling device (20) according to one of claims 2 to 4, wherein the hub (540) has a plurality of recessed notches in its outer face and distributed around the main axis (A1), adapted to guide the sliding of the fingers (521, 531) of the selection shifter (520) and the locking shifter (530).

5. Coupling device (20) according to one of claims 1 to 7, wherein the locking shifter (530) comprises indexing means (536) adapted to lock the locking shifter (530) along the main axis (A1) when the ejection means (534) is inactive.

6. Coupling device (20) according to claim 8, wherein the indexing means (536) comprise, on one of the locking shifter (530) and hub (540), at least one protruding element, preferably a rolling element, which navigates in a groove (546) during the movement of the locking shifter (530) from one coupled position to the other, said groove (546) having a variable depth and being provided recessed in the other of the locking shifter (530) and hub (540).

7. Coupling device (20) according to one of claims 1 to 9, wherein the selection shifter (520) and the locking shifter (530) are shaped in such a way that, to move from one coupled position to the other, the selection shifter (520) travels a distance strictly greater than the distance travelled by the locking shifter (530) to move from one coupled position to the other, preferably twice as far.

8. Speed reduction gearbox (1) consisting of a primary shaft (10) which carries fixed pinions (12, 13), **characterised in that** it further comprises a coupling device (20) according to one of claims 1 to 10, the idler pinions (22, 23) of which mesh with said fixed pinions (12, 13).

9. Motor vehicle consisting of an electric machine, a differential (30) and drive wheels coupled to the differential (30), **characterised in that** it further comprises, between the electric machine and the differential (30), a torque limiter (11) one inlet of which is coupled to the electric machine, a speed reduction gearbox (1) according to claim 11, one of the primary (10) and main (21) shafts of which is coupled to the output of the torque limiter (11) and the other of the primary (10) and main (21) shafts of which is coupled to the differential (30).
